# FASCICULE DE BREVET EUROPEEN

(11) **EP 2 840 883 B1**
(45) Date de publication et mention de la délivrance du brevet: **04.10.2017**
(21) Numéro de dépôt: 13719949.3
(22) Date de dépôt: 29.03.2013
(51) Int. Cl.: A01D 41/08, A01D 45/06, A01D 46/00

(54) **PROCÉDÉ ET DISPOSITIF D'ÉGRENAGE DE GRAINES DE CHANVRE ET MACHINE MOISSONNEUSE DOTÉE D'UN TEL DISPOSITIF**
VERFAHREN UND VORRICHTUNG ZUM ENTHÜLSEN VON HANFSAMEN UND ERNTEMASCHINE MIT EINER SOLCHEN VORRICHTUNG
METHOD AND DEVICE FOR HULLING HEMP SEEDS AND HARVESTER PROVIDED WITH SUCH A DEVICE

(30) Priorité: 23.04.2012 FR 1201189
(43) Date de publication de la demande: 04.03.2015
(73) Titulaire: Nadalin, Rémy, 82440 Cayrac (FR)
(72) Inventeur: Nadalin, Rémy, 82440 Cayrac (FR)
(74) Mandataire: Cabinet BARRE LAFORGUE & associés
(86) Numéro de dépôt international: PCT/FR2013/050698
(87) Numéro de publication internationale: WO 2013/160576

(56) Documents cités:
- EP-A1- 1 757 181
- WO-A1-2007/133098
- DD-A- 10 896
- DE-A1- 3 240 449
- DE-A1- 19 627 137

## Description

L'invention concerne un procédé d'égrenage de graines de chanvre au cours de la moisson d'une culture de plants de chanvre, et un dispositif d'égrenage de graines de chanvre adapté pour pouvoir être monté sur le châssis d'une machine moissonneuse pour permettre l'égrenage des graines de chanvre au fur et à mesure de la moisson, et leur récolte sélective. Elle s'étend à une machine moissonneuse d'une culture de plants de chanvre dotée d'un tel dispositif d'égrenage.

Les plants de chanvre sont des tiges extrêmement fibreuses et hautes. Elles sont extrêmement difficiles à faucher. De nombreux dispositifs ont été proposés dans le passé pour tenter d'automatiser la moisson des plants de chanvre en vue de récolter les fibres. Aucun de ces dispositifs n'est cependant adapté à la récolte des graines de chanvre, qui sont situées en partie supérieure des plants et sont relativement légères, petites et non enrobées. Les différentes tentatives effectuées pour adapter une moissonneuse-batteuse ou une machine ensileuse ou une moissonneuse de plan de chanvre pour permettre la récolte sélective des graines de chanvre se sont traduites par des échecs, dans la mesure où seule une très faible partie (de l'ordre de 25 % maximum) des graines est réellement récoltée lors de la moisson, le reste étant laissé sur le sol et devant faire l'objet d'une deuxième étape éventuelle de récolte, coûteuse et fournissant des graines qui, ayant été laissées au sol, sont sales et/ou de mauvaise qualité. Par ailleurs, compte tenu de la hauteur et de la finesse des plants de chanvre lors de la moisson, le fauchage des plants et la récolte des graines sont très perturbés par le vent, et la plupart des machines connues ne peuvent être utilisées avec efficacité que par temps calme.

WO 2007133098 décrit ainsi une machine moissonneuse présentant un couteau inférieur et un couteau supérieur de hauteur ajustable permettant de tronçonner les plants sur leur partie supérieure contenant les graines, un tambour supérieur récupérant les portions supérieures (panicules) portant les graines. Néanmoins, ce document ne propose pas un dispositif d'égrenage. En outre, le tambour supérieur supposé récupérer les panicules, a en réalité pour effet d'éjecter une bonne partie de ces dernières sur le sol, et au moins partiellement de séparer les graines des panicules qui chutent également sur le sol. Il en résulte une perte considérable des graines récoltées. En outre, un tel dispositif suppose de déplacer en parallèle la machine moissonneuse et une remorque qui récupère les panicules sur le côté. Une telle machine perd également une grande part de son efficacité en présence de vent.

Il a également été proposé (http://www.bafa-gmbh.de/ernte.htm) une machine moissonneuse de plants de chanvre récoltant simultanément les graines dans des trémies à ouverture vers le haut disposées immédiatement à l'arrière d'un dispositif de fauche à rotors juxtaposés dans la largeur. La proportion de graines effectivement récupérées par une telle machine lors de la moisson est extrêmement faible et ne dépasse pas en pratique 25 % par temps calme. Là encore, la machine perd son efficacité en présence de vent.

Aucune des machines proposées jusqu'à maintenant pour la récolte de graines au cours de la moisson d'une culture et qui sont dotées d'au moins un tambour d'égrenage ou autre dispositif mécanique de battage (par exemple DE3240449, EP15757181, DD10896), n'est adaptée en pratique à la récolte des graines de chanvre qui présentent des caractéristiques très différentes de celles des céréales ou des autres graines oléagineuses.

L'invention vise donc à pallier l'ensemble de ces inconvénients en proposant un procédé et un dispositif d'égrenage des graines de chanvre au cours de la moisson d'une culture de plants de chanvre qui permettent une efficacité accrue de l'égrenage et de la récolte sélective des graines de chanvre, et ce de façon simple et à moindre coût. L'invention vise également à proposer une machine moissonneuse -notamment automotrice- permettant d'effectuer la récolte sélective des graines de chanvre au cours de la moisson de plants de chanvre avec une efficacité accrue et ce de façon simple et à moindre coût. L'invention vise également à proposer un tel procédé, un tel dispositif et une telle machine qui reste suffisamment efficaces en présence de vent.

Pour ce faire, l'invention concerne un procédé d'égrenage de graines de chanvre lors de la moisson d'une culture de plants de chanvre, caractérisé en ce qu'une ouverture d'aspiration d'une hotte aspirante d'égrenage est déplacée horizontalement pour la faire pénétrer dans la culture de plants de chanvre à hauteur des graines de chanvre qui sont ainsi égrenées par simple aspiration.

L'invention s'étend à un dispositif pour la mise en oeuvre d'un procédé selon l'invention. Elle concerne donc également un dispositif d'égrenage de graines de chanvre adapté pour pouvoir être monté sur le châssis d'une machine moissonneuse, caractérisé en ce qu'il est constitué d'une hotte aspirante d'égrenage présentant une ouverture d'aspiration adaptée pour pouvoir pénétrer horizontalement dans une culture de plants de chanvre à hauteur des graines de chanvre qui sont ainsi égrenées par simple aspiration.

L'invention s'étend également à une machine moissonneuse de culture de plants de chanvre apte à récolter les graines de chanvre, et dotée d'un dispositif selon l'invention, pour la mise en oeuvre d'un procédé selon l'invention. L'invention concerne donc également une machine moissonneuse d'une culture de plants de chanvre apte à récolter les graines de chanvre comprenant :
- un châssis sur roues adapté pour pouvoir être déplacé dans la culture en vue de sa moisson,
- un dispositif de fauche des plants de chanvre selon une largeur de fauche prédéterminée,
- surmontant le dispositif de fauche, un dispositif d'égrenage et de récolte des graines de chanvre,
caractérisée en ce que le dispositif d'égrenage et de récolte des graines de chanvre comprend un dispositif d'égrenage conforme à l'invention, ce dispositif d'égrenage étant constitué de la hotte aspirante d'égrenage, qui constitue l'unique moyen d'égrenage de la machine.

L'invention part en effet du constat extrêmement surprenant fait par l'inventeur selon lequel le moyen le plus efficace pour égrener et simultanément récupérer les graines de chanvre quasiment sans perte consiste tout simplement à les aspirer vers l'arrière au moins sensiblement horizontalement alors qu'elles sont encore sur plants au champ. Ainsi, la hotte aspirante d'égrenage présente, dans l'invention, une double fonction consistant d'une part à séparer les graines de chanvre des plants sur lesquels elles se trouvent, et d'autre part à les entraîner vers l'arrière de l'ouverture d'aspiration de la hotte aspirante d'égrenage pour pouvoir les récolter et les stocker dans un réservoir approprié de la machine.

Il est à noter à cet égard qu'un dispositif selon l'invention est aussi avantageusement caractérisé en ce qu'il comporte exclusivement une hotte aspirante à titre de moyens d'égrenage, à l'exclusion de tout autre dispositif mécanique (tambour, brosses, grilles mobiles...). Également, un procédé selon l'invention est avantageusement caractérisé en ce qu'on réalise l'égrenage des graines exclusivement par déplacement de la hotte aspirante.

En outre, une machine selon l'invention est aussi avantageusement caractérisée en ce que le dispositif d'égrenage est constitué de la hotte aspirante d'égrenage, qui constitue l'unique moyen d'égrenage de la machine, qui est en particulier exempte de tout tambour, rouleau, batteur, contre batteur, brosses ou grilles mobile. Il en résulte non seulement une plus grande simplicité, et un coût réduit, mais également et surtout, de façon surprenante, une bien meilleure efficacité.

Avantageusement et selon l'invention, on déplace la hotte aspirante d'égrenage à une hauteur comprise entre 1,5 m (hauteur minimale du bord inférieur de l'ouverture d'aspiration) et 4 m (hauteur maximale du bord supérieur de couverture d'aspiration) -notamment entre 2 m et 3,7 m- par rapport au sol. Par ailleurs, avantageusement et selon l'invention, on déplace la hotte aspirante d'égrenage de façon que l'ouverture d'aspiration vienne au contact des plants de chanvre, avant le fauchage des plants de chanvre en partie inférieure. Il en résulte en effet une efficacité encore meilleure de l'égrenage de la récolte.

L'ouverture d'aspiration et la hotte aspirante d'égrenage selon l'invention peuvent présenter diverses formes et dimensions. Néanmoins, avantageusement et selon l'invention, l'ouverture d'aspiration de la hotte aspirante d'égrenage présente une largeur comprise entre 2 m à 6 m, notamment de l'ordre de 4 m à 4,5 m. En outre, avantageusement et selon l'invention, l'ouverture d'aspiration de la hotte aspirante d'égrenage présente une hauteur comprise entre 30 cm et 120 cm, notamment de l'ordre de 80 cm. Par ailleurs, avantageusement et selon l'invention la hotte aspirante d'égrenage présente, entre l'ouverture d'aspiration et une sortie arrière de cette hotte, une longueur comprise entre 0,8 m et 3 m -notamment de l'ordre de 1 m-.

En outre, avantageusement et selon l'invention la hotte aspirante d'égrenage est globalement convergente (au moins en largeur) depuis l'ouverture d'aspiration jusqu'à ladite sortie arrière. Par ailleurs, avantageusement et selon l'invention, ladite sortie arrière présente une section d'aspiration dont l'aire est inférieure à un tiers -notamment inférieure à 20 %- de l'aire de la section d'aspiration de l'ouverture d'aspiration.

En outre, avantageusement selon l'invention, la hotte aspirante d'égrenage comporte au moins un noyau séparateur présentant un bord d'attaque vertical et adapté pour former deux flux d'aspiration convergents séparés par le noyau séparateur, chaque flux d'aspiration s'étendant depuis ladite ouverture d'aspiration jusqu'à une sortie arrière commune centrale de la hotte aspirante d'égrenage. Par exemple, avantageusement et selon l'invention la hotte aspirante d'égrenage comporte un noyau séparateur central présentant un bord d'attaque vertical médian de l'ouverture d'aspiration, ce noyau séparateur central étant adapté pour former deux flux d'aspiration convergents à partir de l'ouverture d'aspiration. De la sorte, pour une même dimension, notamment en largeur, de l'ouverture d'aspiration, le taux de réduction de section de chaque flux d'air entre l'ouverture d'aspiration et ladite sortie arrière peut être plus faible, et optimisé pour l'entraînement des graines de chanvre.

Par ailleurs, avantageusement une machine selon l'invention est aussi caractérisée en ce que le dispositif de fauche est adapté pour sectionner les plants de chanvre en partie inférieure selon une zone transversale de fauche, et en ce que la hotte aspirante d'égrenage est montée sur le châssis de telle sorte que l'ouverture d'aspiration s'étend en saillie vers l'avant par rapport à un plan vertical contenant ladite zone transversale de fauche. L'ouverture d'aspiration qui est donc vers l'avant (par rapport au sens d'avancement de la machine dans la culture) par rapport à la zone transversale de fauche, vient au contact de la partie supérieure des plants de chanvre avant que ces derniers ne soient sectionnés par le dispositif de fauche en partie inférieure.

Avantageusement et selon l'invention, la hotte aspirante d'égrenage est montée sur le châssis de telle sorte que l'ouverture d'aspiration s'étend sur une distance, dite distance d'avance, comprise entre 5 cm et 1 m vers l'avant par rapport à ladite zone transversale de fauche. D'excellents résultats ont été obtenus avec une distance d'avance de l'ouverture d'aspiration comprise entre 10 cm et 20 cm par rapport à la zone transversale de fauche.

En outre, avantageusement et selon l'invention, la hotte aspirante d'égrenage est montée sur le châssis de telle sorte que l'ouverture d'aspiration s'étend au moins sensiblement verticalement. Dans certains modes de réalisation les plus simples et moins coûteux, la hotte aspirante d'égrenage peut être montée fixe sur le châssis, de façon non ajustable. Néanmoins, de préférence, avantageusement et selon l'invention la hotte aspirante d'égrenage est montée sur le châssis de façon ajustable en hauteur et/ou en inclinaison par rapport à l'horizontale et/ou en position longitudinale par rapport au châssis.

Par ailleurs, de préférence, avantageusement et selon l'invention l'ouverture d'aspiration de la hotte aspirante d'égrenage s'étend sur une largeur correspondant à la largeur de fauche, c'est-à-dire à la largeur de la bande de plants de chanvre sectionnés par le dispositif de fauche. La largeur de la hotte aspirante d'égrenage peut être légèrement supérieure à la largeur de fauche. En outre, avantageusement et selon l'invention, la hotte aspirante d'égrenage est montée sur le châssis de telle sorte que l'ouverture d'aspiration s'étend à une hauteur comprise entre 1,5 m et 4 m -notamment entre 2 m et 3,7 m- par rapport au sol.

Une machine selon l'invention peut également être dotée d'un dispositif de hachage et/ou broyage de ces tiges, et éventuellement d'un dispositif apte à récupérer les tiges des plants de chanvre après leur fauchage.

Par ailleurs, une machine selon l'invention comprend en outre avantageusement une unité de dépoussiérage centrifuge des graines récoltées, reliée à une sortie arrière de ladite hotte aspirante d'égrenage. Avantageusement et selon l'invention l'unité de dépoussiérage centrifuge présente plusieurs étages successifs de section croissante vers l'aval. Avantageusement et selon l'invention, cette unité de dépoussiérage centrifuge présente elle-même une sortie reliée à un réservoir de récupération des graines, tel qu'une trémie portée par le châssis de la machine.

Dans un mode de réalisation préférentiel conforme à l'invention, la sortie arrière de la hotte aspirante d'égrenage est connectée à un ventilateur aspirateur -notamment de type centrifuge- dont la sortie alimente l'unité de dépoussiérage centrifuge, cette dernière étant reliée à l'ouverture supérieure d'une trémie par un conduit qui véhicule les graines de chanvre dépoussiérées.

L'invention concerne également un procédé, un dispositif et une machine caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :

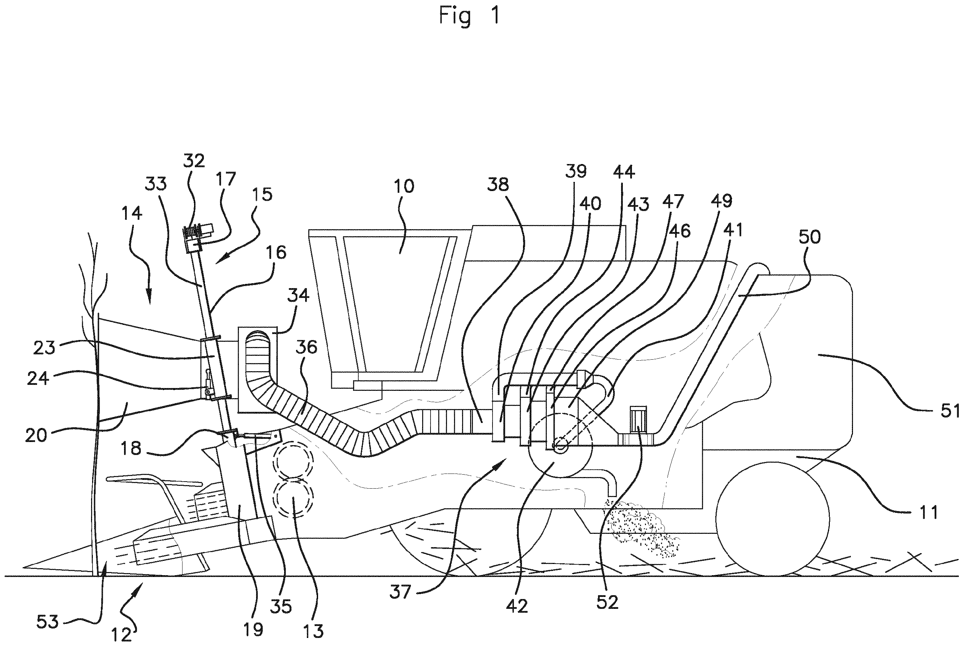

- la figure 1 est une vue schématique de côté avec arrachés partiels d'une machine selon un mode de réalisation de l'invention, permettant la mise en oeuvre d'un procédé selon l'invention,

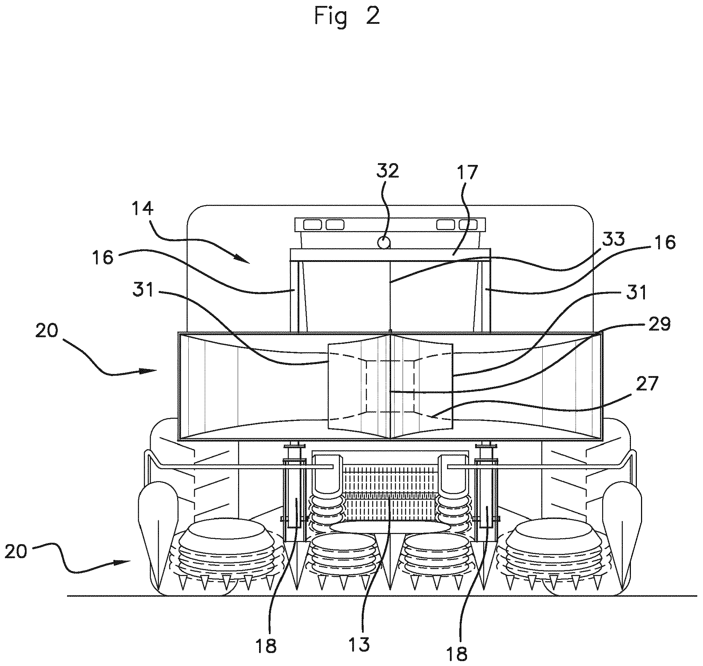

- la figure 2 est une vue schématique de l'avant d'une machine selon un mode de réalisation de l'invention,

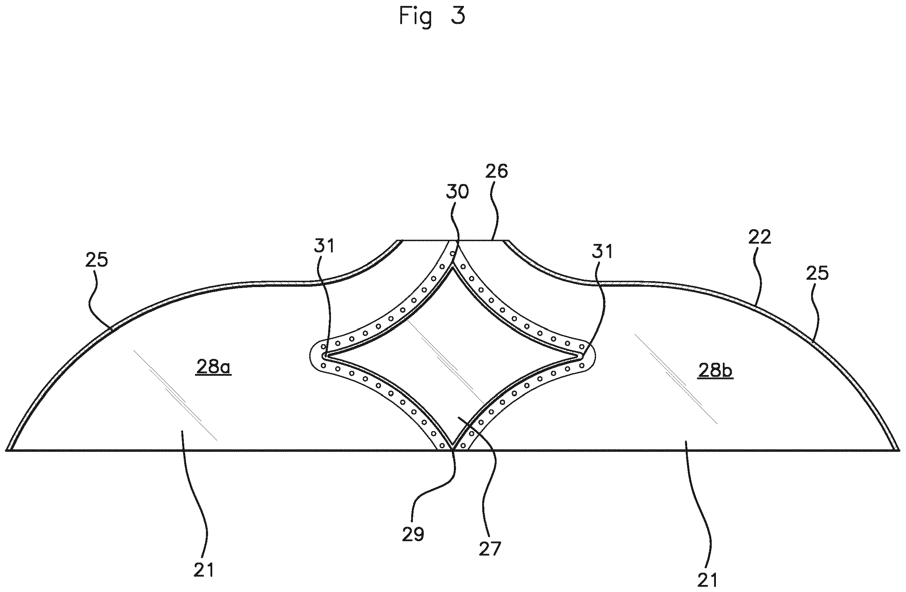

- la figure 3 est une vue en coupe par un plan horizontal d'une hotte aspirante d'égrenage d'un dispositif d'égrenage de graines de chanvre selon un mode de réalisation de l'invention.

Une machine moissonneuse de culture de plants de chanvre selon l'invention représentée sur les figures est une machine agricole automotrice, par exemple sur une base d'ensileuse automotrice, comprenant un châssis 11 sur roues, une cabine 10 de pilotage et au moins un moteur thermique permettant l'entraînement des roues et l'alimentation en fluides d'actionnement sous pression, notamment pour les différents vérins hydrauliques et/ou pneumatiques de la machine.

Cette machine porte tout d'abord un dispositif 12 de fauche des plants de chanvre, s'étendant à l'avant du châssis 11, de préférence à une hauteur réglable, et sur une largeur de fauche prédéterminée supérieure à la voie maximum définie par les roues de la machine. Ce dispositif 12 de fauche peut être réalisé de toute façon connue en soi (cf. notamment http://www.bafa-gmbh.de/ernte.htm), par exemple et de préférence comme représenté par une pluralité de rotors de fauche à couteaux et contre couteaux rotatifs à axes au moins sensiblement verticaux, ces différents rotors étant juxtaposés dans la largeur, de façon à définir une zone 53 transversale de fauche des plants en leur partie inférieure.

La machine comprend également, en partie centrale immédiatement à l'arrière du dispositif 12 de fauche, un hacheur 13 des tiges récoltées, ce hacheur 13 présentant une ouverture orientée vers l'avant dans laquelle les tiges sont alimentées après leur fauchage en partie basse par le dispositif 12 de fauche.

La machine selon l'invention porte également un dispositif 14 selon l'invention d'égrenage et de récolte des graines de chanvre, surmontant le dispositif 12 de fauche. Ce dispositif 14 d'égrenage et de récolte des graines de chanvre comprend un portique 15 formé de deux montants 16 et d'une traverse supérieure 17.

Le portique 15 porte une hotte 20 aspirante d'égrenage présentant une ouverture 21 d'aspiration orientée vers l'avant et adaptée pour pouvoir pénétrer horizontalement dans une culture de plants de chanvre à hauteur des graines de chanvre, et pour pouvoir égrener ces dernières par simple aspiration vers l'arrière par rapport à la direction d'avancement de la machine dans la culture. L'ouverture 21 d'aspiration est formée à l'avant d'un pavillon 22 de la hotte 20 définissant au moins un conduit d'aspiration des graines vers l'arrière. Ce pavillon 22 est porté à l'avant du portique 15 par deux manchons 23 adaptés pour pouvoir coulisser autour et le long des montants 16 de façon à permettre le réglage en hauteur du pavillon 22 et de l'ouverture 21 d'aspiration, et ce grâce à un vérin ou, de préférence comme représenté, grâce à un treuil 32 porté par la traverse 17 supérieure du portique 15 et actionnant un câble 33 dont l'extrémité inférieure est fixée au pavillon 22 de façon à pouvoir le faire monter le long des montants 16. Le pavillon 22 suspendu au câble 33 peut redescendre librement le long des montants 16 sous l'effet de son propre poids.

La hauteur des montants 16 est adaptée pour permettre un ajustement de la hauteur de la hotte 20 aspirante au niveau des graines des plants de chanvre, c'est-à-dire à une hauteur comprise entre 1,5 m (hauteur minimale du bord inférieur de l'ouverture 21 d'aspiration) et 4 m (hauteur maximale du bord supérieur de l'ouverture 21 d'aspiration) -notamment entre 2 m et 3,7 m- par rapport au sol.

Les montants 16 sont fixés rigidement au châssis 11 par leurs extrémités inférieures 18, par exemple grâce à des fourreaux 19 fixés rigidement sur le châssis 11 et recevant les extrémités inférieures 18 des montants 16. Les montants 16 s'étendent vers le haut à partir des fourreaux 19, verticalement ou légèrement inclinés par rapport à la verticale. Dans le mode de réalisation préférentiel représenté, les montants 16 sont légèrement inclinés vers l'avant par rapport à la verticale. Leur inclinaison par rapport à la verticale peut être réglée grâce à des vérins 35 interposés entre le châssis 11 et les manchons 23 de support du pavillon 22. Pour ce faire, les fourreaux 19 ne sont pas strictement cylindriques de révolution mais présentent une section oblongue selon la direction longitudinale. Ce réglage d'inclinaison permet notamment d'ajuster la position longitudinale vers l'avant de l'ouverture 21 d'aspiration par rapport au dispositif 12 de fauche. En effet, selon l'invention, l'ouverture 21 d'aspiration s'étend sur une distance non nulle, avantageusement comprise entre 5 cm et 1 m, vers l'avant par rapport à la zone 53 transversale de fauche définie par le dispositif 12 de fauche. De la sorte, l'ouverture 21 d'aspiration vient au contact des graines de chanvre pour les séparer des plants et les aspirer dans la hotte 20 aspirante d'égrenage, avant que les plants ne soient fauchés à leur pied par le dispositif 12 de fauche.

Le pavillon 22 est de préférence monté articulé sur les manchons 23 selon un axe d'articulation horizontal transversal de façon à permettre également le réglage de son inclinaison par rapport à l'horizontale, et donc de l'inclinaison de l'ouverture 21 d'aspiration par rapport à la verticale, grâce à au moins un vérin 24 interposé entre un manchon 23 et le pavillon 22.

Le pavillon 22 comprend une paroi 25 extérieure étanche à l'air délimitant vers l'avant l'ouverture 21 d'aspiration et s'étendant vers l'arrière en convergeant au moins latéralement jusqu'à une sortie 26 arrière centrale de section réduite par rapport à celle de l'ouverture 21 d'aspiration. De préférence, le pavillon 22 est également convergent dans sa hauteur, la hauteur de l'ouverture 21 d'aspiration étant sensiblement supérieure à la hauteur de la sortie 26 arrière centrale. La longueur du pavillon 22 peut varier dans une large plage de valeurs, mais est de préférence aussi faible que possible de façon à limiter le porte-à-faux sur le portique 15 et l'encombrement longitudinal de la machine.

Pour limiter cette longueur du pavillon 22 et favoriser l'efficacité de l'aspiration, la hotte 20 aspirante d'égrenage comporte un noyau 27 séparateur déflecteur s'étendant dans le pavillon 22 en partie centrale entre l'ouverture 21 d'aspiration et la sortie 26 arrière de façon à former deux flux d'aspiration convergents séparés par ce noyau 27 séparateur. Le noyau 27 séparateur présente un bord d'attaque 29 vertical séparant sur sa hauteur et en partie médiane l'ouverture 21 d'aspiration en partie centrale. Le noyau 27 séparateur présente également un bord de fuite 30 vertical séparant sur sa hauteur et en partie médiane la sortie 26 arrière.

Ainsi, le pavillon 22 forme, entre sa paroi 25 extérieure et le noyau 27 séparateur, deux conduits convergents 28a, 28b symétriques l'un de l'autre par rapport à un plan vertical longitudinal médian, un de chaque côté du noyau 27 séparateur. Entre son bord d'attaque 29 de son bord de fuite 30, le noyau 27 séparateur présente deux bords 31 extrêmes latéraux déviant les flux d'aspiration latéralement vers la sortie 26 centrale. Le noyau 27 séparateur présente en section horizontale une forme générale de losange à angles arrondis et côtés légèrement cintrés concaves, dont les formes sont optimisées pour favoriser l'écoulement d'air entre l'ouverture 21 d'aspiration et la sortie 26 arrière dans chaque conduit convergent 28a, 28b ainsi formé. Avantageusement, les angles latéraux du losange (c'est-à-dire les bords 31 extrêmes latéraux du noyau 27 séparateur déviant les flux d'aspiration latéralement) sont situés au moins sensiblement à mi-distance longitudinalement entre l'ouverture 21 d'aspiration et la sortie 26 arrière.

Le pavillon 22 avec son noyau 27 séparateur central peut être réalisé en tôle mécano soudée ou en tout autre matériau synthétique rigide, par exemple en matériau composite.

L'ouverture 21 d'aspiration de la hotte 20 aspirante d'égrenage présente avantageusement une largeur comprise entre 2 m à 6 m (correspondant à la largeur de fauche), et une hauteur comprise entre 30 cm et 120 cm. Entre l'ouverture 21 d'aspiration et la sortie 26 arrière, la hotte aspirante d'égrenage présente une longueur avantageusement comprise entre 0,8 m et 3 m. À titre d'exemple, de bons résultats ont été obtenus avec un pavillon 22 de la hotte 20 aspirante d'égrenage présentant les dimensions suivantes :
- ouverture 21 d'aspiration :
   - largeur de l'ordre de 4,25 m,
   - hauteur de l'ordre de 80 cm,
   - soit une section So de passage d'air de l'ordre de 3,4 m²,
- sortie 26 arrière :
   - largeur de l'ordre de 40 cm,
   - hauteur de l'ordre de 40 cm,
   - soit une section Ss de passage d'air de l'ordre de 0,16 m²,
- longueur entre l'ouverture 21 d'aspiration et la sortie 26 arrière : de l'ordre de 1 m,
- rayon de courbure de la paroi 25 arrière du pavillon à partir de l'ouverture 21 d'aspiration : de l'ordre de 1,4 m,
- largeur hors tout définie par le noyau 27 séparateur entre ces bords 31 extrêmes latéraux : de l'ordre de 1,4 m,
- rayon de courbure des faces concaves du noyau 27 séparateur : de l'ordre de 0,9 m.

Dans cet exemple, l'aire de la section de la sortie 26 arrière est inférieure à 5 % de l'aire de la section d'aspiration de l'ouverture 21 d'aspiration.

Il va de soi que d'autres dimensions peuvent bien évidemment être adoptées pour l'optimisation du fonctionnement de la hotte 20.

La sortie 26 arrière est reliée à l'entrée d'un ventilateur 34 aspirateur choisi de façon à fournir la dépression et le débit appropriés et permettre le passage des graines de chanvre aspirées et entraînées dans le flux d'air jusqu'à la sortie de ce ventilateur 34. Par exemple, on peut utiliser un moto-ventilateur 34 centrifuge à pales ouvertes adapté pour délivrer un débit d'air pouvant varier de 360 m³/h à 50 000 m³/h et une variation de pression entre 500 Pa et 5000 Pa. Avantageusement et selon l'invention, on règle le fonctionnement de ce moto-ventilateur 34 pour obtenir une vitesse d'aspiration des graines de chanvre à la sortie du moto-ventilateur 34 comprise entre 10 m/s et 50 m/s, par exemple de l'ordre de 25 m/s. On peut par exemple utiliser un moto-ventilateur 34 commercialisé sous la référence PDM/T par la société italienne Coral (http://www.coral.eu/catalogo/ventilatori.pdf).

L'entrée axiale de ce moto-ventilateur 34 est fixée à la sortie 26 arrière, de sorte que le moto-ventilateur 34 est porté par le pavillon 22, et est donc solidaire de ce dernier en translation le long des montants du portique 15. Des brides de fixation (non représentées) peuvent être prévues pour relier le moto-ventilateur 34, ou une platine support de ce dernier, aux manchons 23 portant le pavillon 22. La sortie tangentielle du moto-ventilateur 34 est reliée à une conduite souple 36 permettant d'acheminer les graines de chanvre vers une unité 37 de dépoussiérage de la machine.

Cette unité 37 de dépoussiérage est une unité de dépoussiérage centrifuge à plusieurs étages successifs de section croissante vers l'aval. Elle comprend une entrée 38 tubulaire reliée à la conduite souple 36, dans laquelle les graines de chanvre sont alimentées à une vitesse comprise entre 10 m/s et 50 m/s, par exemple de l'ordre de 25 m/s. Cette entrée 38 tubulaire communique avec un premier étage 39 cylindrique d'aspiration centrifuge des poussières, présentant au moins une sortie 40 radiale reliée par un conduit 41 à un aspirateur 42 de poussières. Le premier étage 39 cylindrique communique axialement avec un deuxième étage 43 de plus grande section droite transversale, et donc dans lequel le flux d'air et de graines de chanvre est ralenti en proportion. Ce deuxième étage 43 présente également une sortie 44 radiale reliée par un conduit à l'aspirateur 42. Le deuxième étage 43 cylindrique communique axialement avec un troisième étage 46 de plus grande section droite transversale, et donc dans lequel le flux d'air et de graines de chanvre est encore plus ralenti en proportion. Ce troisième étage 46 présente également une sortie 47 radiale reliée par un conduit à l'aspirateur 42.

La sortie 49 axiale du troisième étage 46 constitue la sortie de l'unité 37 de dépoussiérage. À cette sortie 49, le flux d'air est dépoussiéré et entraîne des graines de chanvre, qui peuvent être acheminées par une conduite 50 jusqu'à une trémie de stockage 51 de la machine, éventuellement via une suceuse 52 à graines (comprenant un moto-ventilateur, et un cyclone) apte à réaccélérer le flux d'air et les graines.

Le procédé d'égrenage de graines de chanvre mis en oeuvre par une telle machine consiste à faire avancer la machine dans la récolte de plants de chanvre, avec la hotte 20 aspirante d'égrenage s'étendant au moins sensiblement horizontalement à hauteur des graines de chanvre sur la partie supérieure des plants. Le moto-ventilateur 34 étant actif, les graines de chanvre sont séparées des plants par simple aspiration, aspirées dans la hotte 20 et acheminées jusqu'à l'unité 37 de dépoussiérage par la conduite 36 souple, puis acheminées dans la trémie 51 de stockage. Dans un procédé selon l'invention, l'égrenage des graines intervient en particulier par simple aspiration, sans nécessiter aucune action mécanique par contact sur les graines, notamment sans brossage, ni secouage, ni tambour.

La hotte 20 aspirante d'égrenage vient au contact des plants avant leur fauchage par le dispositif de fauche 12.

L'invention peut faire l'objet de nombreuses variantes de réalisation par rapport au mode de réalisation préférentiel représenté sur les figures et décrit ci-dessus. En particulier, le mécanisme de montage du dispositif d'égrenage sur la machine peut faire l'objet de nombreuses variantes. La forme spécifique du dispositif d'égrenage peut être adaptée en fonction de la nature exacte de la récolte à traiter, le dispositif de fauche 12 peut également être différent, voire absent, la machine réalisant uniquement un égrenage sans fauchage des plants.

## Revendications

1. Procédé d'égrenage de graines de chanvre lors de la moisson d'une culture de plants de chanvre, **caractérisé en ce qu'**une ouverture (21) d'aspiration d'une hotte (20) aspirante d'égrenage est déplacée horizontalement pour la faire pénétrer dans la culture de plants de chanvre à hauteur des graines de chanvre qui sont ainsi égrenées par simple aspiration.

2. Procédé selon la revendication 1, **caractérisé en ce qu'**on déplace la hotte (20) aspirante d'égrenage de façon que l'ouverture (21) d'aspiration vienne au contact des plants de chanvre, avant le fauchage des plants de chanvre en partie inférieure.

3. Procédé selon l'une des revendications 1 ou 2, **caractérisé en ce qu'**on réalise l'égrenage des graines exclusivement par déplacement de la hotte (20) aspirante.

4. Dispositif d'égrenage de graines de chanvre adapté pour pouvoir être monté sur le châssis (11) d'une machine moissonneuse, **caractérisé en ce qu'**il est constitué d'une hotte (20) aspirante d'égrenage présentant une ouverture (21) d'aspiration adaptée pour pouvoir pénétrer horizontalement dans une culture de plants de chanvre à hauteur des graines de chanvre qui sont ainsi égrenées par simple aspiration.

5. Dispositif selon la revendication 4, **caractérisé en ce que** la hotte (20) aspirante d'égrenage comprend une sortie (26) arrière et est globalement convergente depuis l'ouverture (21) d'aspiration jusqu'à ladite sortie (26) arrière, et **en ce que** ladite sortie (26) arrière présente une section d'aspiration dont l'aire est inférieure à un tiers de l'aire de la section d'aspiration de l'ouverture (21) d'aspiration.

6. Dispositif selon l'une des revendications 4 ou 5, **caractérisé en ce que** la hotte (20) aspirante d'égrenage comporte au moins un noyau (27) séparateur présentant un bord d'attaque (29) vertical et adapté pour former deux flux (28a, 28b) d'aspiration convergents séparés par le noyau (27) séparateur, chaque flux d'aspiration s'étendant depuis ladite (21) ouverture d'aspiration jusqu'à une sortie (26) arrière commune centrale de la hotte (20) aspirante d'égrenage.

7. Machine moissonneuse d'une culture de plants de chanvre apte à récolter les graines de chanvre comprenant :
- un châssis (11) sur roues adapté pour pouvoir être déplacé dans la culture en vue de sa moisson,
- un dispositif (12) de fauche des plants de chanvre selon une largeur de fauche prédéterminée,
- surmontant le dispositif (12) de fauche, un dispositif (14) d'égrenage et de récolte des graines de chanvre,
**caractérisée en ce que** le dispositif (14) d'égrenage et de récolte des graines de chanvre comprend un dispositif (14) d'égrenage conforme à l'une des revendications 4 à 6, ce dispositif (14) d'égrenage étant constitué de la hotte (20) aspirante d'égrenage, qui constitue l'unique moyen d'égrenage de la machine.

8. Machine selon la revendication 7, **caractérisée en ce que** le dispositif (12) de fauche est adapté pour sectionner les plants de chanvre en partie inférieure selon une zone (53) transversale de fauche, et **en ce que** la hotte (20) aspirante d'égrenage est montée sur le châssis (11) de telle sorte que l'ouverture (21) d'aspiration s'étend en saillie vers l'avant par rapport à un plan vertical contenant ladite zone (53) transversale de fauche.

9. Machine selon la revendication 8, **caractérisée en ce que** la hotte (20) aspirante d'égrenage est montée sur le châssis (11) de telle sorte que l'ouverture (21) d'aspiration s'étend sur une distance, dite distance d'avance, comprise entre 5 cm et 1 m vers l'avant par rapport à ladite zone (53) transversale de fauche.

10. Machine selon l'une des revendications 7 à 9, **caractérisée en ce que** la hotte (20) aspirante d'égrenage est montée sur le châssis (11) de telle sorte que l'ouverture (21) d'aspiration s'étend au moins sensiblement verticalement.

11. Machine selon l'une des revendications 7 à 10, **caractérisée en ce que** la hotte (20) aspirante d'égrenage est montée sur le châssis (11) de telle sorte que l'ouverture (21) d'aspiration s'étend à une hauteur comprise entre 1,5 m et 4 m par rapport au sol.

12. Machine selon l'une des revendications 7 à 11, **caractérisée en ce que** la hotte (20) aspirante d'égrenage est montée sur le châssis (11) de façon ajustable en hauteur et/ou en inclinaison par rapport à l'horizontale et/ou en position longitudinale par rapport au châssis (11).

13. Machine selon l'une des revendications 7 à 12, **caractérisée en ce que** l'ouverture (21) d'aspiration de la hotte (20) aspirante d'égrenage s'étend sur une largeur correspondant à la largeur de fauche.

14. Machine selon l'une des revendications 7 à 13, **caractérisée en ce qu'**elle comprend une unité (27) de dépoussiérage centrifuge des graines récoltées, reliée à une sortie (26) arrière de ladite hotte (20) aspirante d'égrenage.

15. Machine selon la revendication 14, **caractérisée en ce que** l'unité (27) de dépoussiérage centrifuge présente plusieurs étages (39, 43, 46) successifs de section croissante vers l'aval.

## Patentansprüche

1. Verfahren zum Entkörnen von Hanfsamen bei der Ernte einer Hanfpflanzenkultur, **dadurch gekennzeichnet, dass** eine Saugöffnung (21) einer Abzugshaube (20) zum Entkörnen horizontal verschoben wird, um sie auf Höhe der Hanfsamen in die Hanfpflanzenkultur eindringen zu lassen, die somit durch einfaches Absaugen entkörnt werden.

2. Verfahren nach Anspruch 1, **dadurch gekennzeichnet, dass** man die Abzugshaube (20) zum Entkörnen derart verschiebt, dass die Saugöffnung (21) vor dem Mähen der Hanfpflanzen im unteren Abschnitt in Kontakt mit den Hanfpflanzen kommt.

3. Verfahren nach einem der Ansprüche 1 oder 2, **dadurch gekennzeichnet, dass** man das Entkörnen der Samen ausschließlich durch Verschieben der Abzugshaube (20) zum Entkörnen durchführt.

4. Vorrichtung zum Entkörnen von Hanfsamen, ausgeführt, um auf dem Gestell (11) einer Erntemaschine montiert werden zu können, **dadurch gekennzeichnet, dass** sie aus einer Abzugshaube (20) zum Entkörnen gebildet wird, die eine Saugöffnung (21) aufweist, die sich dazu eignet, um auf Höhe der Hanfsamen horizontal in eine Hanfpflanzenkultur einzudringen, die somit durch einfaches Absaugen entkörnt werden.

5. Vorrichtung nach Anspruch 4, **dadurch gekennzeichnet, dass** die Abzugshaube (20) zum Entkörnen einen hinteren Ausgang (26) umfasst und im Allgemeinen von der Saugöffnung (21) bis zum besagten hinteren Ausgang (26) zusammenlaufend ist, und dadurch, dass der besagte hintere Ausgang (26) einen Saugquerschnitt aufweist, dessen Fläche kleiner ist, als ein Drittel der Fläche des Saugquerschnitts der Saugöffnung (21).

6. Vorrichtung nach einem der Ansprüche 4 oder 5, **dadurch gekennzeichnet, dass** die Abzugshaube (20) zum Entkörnen zumindest einen Trennkern (27) umfasst, der eine vertikale Vorderkante (29) aufweist und ausgeführt ist, um zwei zusammenlaufende Saugströmungen (28a, 28b) zu bilden, die durch den Trennkern (27) getrennt werden, wobei sich jede Saugströmung von der besagten Saugöffnung (21) bis zu einem gemeinsamen zentralen hinteren Ausgang (26) der Abzugshaube (20) zum Entkörnen erstreckt.

7. Erntemaschine für eine Hanfpflanzenkultur, die in der Lage ist, die Hanfsamen zu ernten, umfassend:
- ein Gestell (11) auf Rädern, das ausgeführt ist, um in Hinblick auf ihre Ernte in der Kultur verschoben zu werden,
- eine Vorrichtung (12) zum Mähen der Hanfpflanzen gemäß einer vorbestimmten Mähbreite,
- die Vorrichtung (12) zum Mähen überragend eine Vorrichtung (14) zum Entkörnen und zum Ernten der Hanfsamen,
**dadurch gekennzeichnet, dass** die Vorrichtung (14) zum Entkörnen und zum Ernten der Hanfsamen eine Vorrichtung (14) zum Entkörnen nach einem der Ansprüche 4 bis 6 umfasst, wobei diese Vorrichtung (14) zum Entkörnen aus der Abzugshaube (20) zum Entkörnen gebildet wird, die das einzige Mittel zum Entkörnen der Maschine bildet.

8. Maschine nach Anspruch 7, **dadurch gekennzeichnet, dass** die Vorrichtung (12) zum Mähen ausgeführt ist, um die Hanfpflanzen im unteren Abschnitt gemäß einer querlaufenden Mähzone (53) zu durchtrennen, und dadurch, dass die Abzugshaube (20) zum Entkörnen derart auf dem Gestell (11) montiert ist, dass sich die Saugöffnung (21) nach vorne überstehend im Verhältnis zu einer vertikalen Ebene erstreckt, die die besagte querlaufende Mähzone (53) enthält.

9. Maschine nach Anspruch 8, **dadurch gekennzeichnet, dass** die Abzugshaube (20) zum Entkörnen derart auf dem Gestell (11) montiert ist, dass sich die Saugöffnung (21) in einem Abstand, der Vorsprungsabstand genannt wird, zwischen 5 cm und 1 m nach vorne im Verhältnis zur besagten querlaufenden Mähzone (53) erstreckt.

10. Maschine nach einem der Ansprüche 7 bis 9, **dadurch gekennzeichnet, dass** die Abzugshaube (20) zum Entkörnen derart auf dem Gestell (11) montiert ist, dass sich die Saugöffnung (21) zumindest in etwa vertikal erstreckt.

11. Maschine nach einem der Ansprüche 7 bis 10, **dadurch gekennzeichnet, dass** die Abzugshaube (20) zum Entkörnen derart auf dem Gestell (11) montiert ist, dass sich die Saugöffnung (21) auf einer Höhe zwischen 1,5 m und 4 m im Verhältnis zum Boden erstreckt.

12. Maschine nach einem der Ansprüche 7 bis 11, **dadurch gekennzeichnet, dass** die Abzugshaube (20) zum Entkörnen in in der Höhe und/ oder in der Neigung im Verhältnis zur Horizontalen einstellbarer Form und/ oder in einer Längsposition im Verhältnis zum Gestell (11) auf dem Gestell (11) montiert ist.

13. Maschine nach einem der Ansprüche 7 bis 12, **dadurch gekennzeichnet, dass** sich die Saugöffnung (21) der Abzugshaube (20) zum Entkörnen über eine Breite erstreckt, die der Mähbreite entspricht.

14. Maschine nach einem der Ansprüche 7 bis 13, **dadurch gekennzeichnet, dass** sie eine Zentrifugal-Entstaubeinheit (27) für die geernteten Samen umfasst, die mit einem hinteren Ausgang (26) der besagten Abzugshaube (20) zum Entkörnen verbunden ist.

15. Maschine nach Anspruch 14, **dadurch gekennzeichnet, dass** die Zentrifugal-Entstaubeinheit (27) mehrere aufeinanderfolgende Stufen (39, 43, 46) mit stromabwärts zunehmendem Querschnitt aufweist.

## Claims

1. Method for hulling hemp seeds during the harvesting of a crop of hemp plants, **characterised in that** a suction opening (21) of a hulling extractor hood (20) is moved horizontally in order to introduce it into the crop of hemp plants at the level of the hemp seeds which are thus hulled by simple suction.

2. Method according to claim 1, **characterised in that** the hulling extractor hood (20) is moved such that the suction opening (21) enters into contact with the hemp plants, before the mowing of the lower part of the hemp plants.

3. Method according to either claim 1 or claim 2, **characterised in that** the seeds are exclusively hulled by moving the extractor hood (20).

4. Device for hulling hemp seeds suitable for being mounted on the frame (11) of a harvester, **characterised in that** it is comprised from a hulling extractor hood (20) having a suction opening (21) suitable for being horizontally introduced into a crop of hemp plants at the level of the hemp seeds which are thus hulled by simple suction.

5. Device according to claim 4, **characterised in that** the hulling extractor hood (20) comprises a rear outlet (26) and is convergent on a whole from the suction opening (21) to said rear outlet (26), and **in that** said rear outlet (26) has an exhaust section, the area of which is less than one third of the area of the exhaust section of the suction opening (21).

6. Device according to either claim 4 or claim 5, **characterised in that** the hulling extractor hood (20) comprises at least one separator core (27) having a vertical leading edge (29) and suitable for forming two convergent suction flows (28a, 28b) separated by the separator core (27), each suction flow extending from said suction opening (21) as far as a common, central rear outlet (26) of the hulling extractor hood (20).

7. Harvester for a crop of hemp plants capable of harvesting the hemp seeds comprising:
- a frame (11) on wheels suitable for being moved in the crop for the purpose of the harvesting thereof,
- a device (12) for mowing hemp plants according to a predetermined mowing width,
- mounting the mowing device (12) on top of a device (14) for hulling and harvesting hemp seeds,
**characterised in that** the device (14) for hulling and harvesting hemp seeds comprises a hulling device (14) according to one of claims 4 to 6, said hulling device (14) being comprised from the hulling extractor hood (20), which constitutes the sole hulling means of the harvester.

8. Harvester according to claim 7, **characterised in that** the mowing device (12) is suitable for cutting the lower part of the hemp plants according to a transverse mowing area (53), and **in that** the hulling extractor hood (20) is mounted on the frame (11) such that the suction opening (21) protrudes forwards relative to a vertical plane containing said transverse mowing area (53).

9. Harvester according to claim 8, **characterised in that** the hulling extractor hood (20) is mounted on the frame (11) such that the suction opening (21) extends over a distance, known as a leading distance, in the range 5 cm to 1 m forwards relative to said transverse mowing area (53).

10. Harvester according to one of claims 7 to 9, **characterised in that** the hulling extractor hood (20) is mounted on the frame (11) such that the suction opening (21) extends at least substantially vertically.

11. Harvester according to one of claims 7 to 10, **characterised in that** the hulling extractor hood (20) is mounted on the frame (11) such that the suction opening (21) extends at a level in the range of 1.5 m to 4 m relative to the ground.

12. Harvester according to one of claims 7 to 11, **characterised in that** the hulling extractor hood (20) is mounted on the frame (11) such that the height and/or incline thereof can be adjusted relative to the horizontal and/or such that the longitudinal position thereof can be adjusted relative to the frame (11).

13. Harvester according to one of claims 7 to 12, **characterised in that** the suction opening (21) of the hulling extractor hood (20) extends over a width corresponding to the mowing width.

14. Harvester according to one of claims 7 to 13, **characterised in that** it comprises a centrifugal dedusting unit (27) for removing dust from the harvested seeds, connected to a rear outlet (26) of said hulling extractor hood (20).

15. Harvester according to claim 14, **characterised in that** the centrifugal dedusting unit (27) has a plurality of successive stages (39, 43, 46), the section of which increases in the downstream direction.
